## Europäisches Patentamt

## European Patent Office

## Office européen des brevets

(19)

(11) Veröffentlichungsnummer: **0 132 691**
**B1**

(12) **EUROPÄISCHE PATENTSCHRIFT**

(45) Veröffentlichungstag der Patentschrift:
**13.01.88**

(51) Int. Cl.⁴: **G 01 N 27/56**

(21) Anmeldenummer: **84108054.2**

(22) Anmeldetag: **10.07.84**

(54) Gasmessfühler.

(30) Priorität: **29.07.83 DE 3327397**

(43) Veröffentlichungstag der Anmeldung:
**13.02.85 Patentblatt 85/7**

(45) Bekanntmachung des Hinweises auf die Patenterteilung:
**13.01.88 Patentblatt 88/2**

(84) Benannte Vertragsstaaten:
**CH DE FR GB IT LI NL SE**

(56) Entgegenhaltungen:
**EP-A-0 087 626**
**DE-A-3 035 608**
**FR-A-2 398 301**
**GB-A-2 017 925**
**GB-A-2 031 156**
**US-A-4 169 778**

(73) Patentinhaber: **ROBERT BOSCH GMBH, Postfach 50, D-7000 Stuttgart 1 (DE)**

(72) Erfinder: **Bayha, Kurt, Albertstrasse 4, D-7141 Oberriexingen (DE)**
Erfinder: **Weyl, Helmut, Dipl.- Ing., Peter- von- Koblenzstrasse 34, D-7141 Schwieberdingen (DE)**

EP 0 132 691 B1

LIBER, STOCKHOLM 1988

## Beschreibung

### Stand der Technik

Die Erfindung geht aus von einem Gasmeßfühler nach der Gattung des unabhängigen Anspruchs 1; ein solcher Gasmeßfühler ist aus der DE-A-2 729 475 bekannt, er hat jedoch aufgrund seines als stabförmiges Bauteil ausgebildeten Heizelementes und seines außerhalb des Gasmeßfühler-Gehäuses gelegenen elektrischen Anschlusses eine relativ große Baulänge, wobei sein Anschlußkabel infolge von Zug-, Verdreh- und/oder Schüttelbeanspruchungen vom Gasmeßfüler leicht getrennt wird.

Es wurde außerdem auch schon bei Gasmeßfühlern vorgeschlagen (EP-A-87 626, veröffentlicht am 07.09.83), die Anschlußbereiche der Leiterbahnen auf plättchenförmigen Sensorelementen mittels seitlich federnden Verbindungselementen elektrisch zu verbinden; die Herstellung der zugehörigen Teile des Anschlußbereichs und deren Montage ist für eine Serienfertigung jedoch sehr umständlich und teuer.

In der FR-A-2 398 301 ist zudem ein Gasmeßfühler mit einem meßgasseits verschlossenem Festelektrolytrohr beschrieben, in welches ein metallummantelter Widerstandsheizstab hineinragt; der elektrische Anschluß dieses Widerstandsheizstabes erfolgt einerseits über einen axial im Gasmeßfühler verlaufenden Metallstab und andererseits über seinen elektrisch an Masse liegenden Metallmantel. Der Signalkreis dieses Gasmeßfühlers enthält unter anderem eine Schraubenfeder, die mit Abstand und koaxial zu dem Metallstab des Widerstandsheizstabs angeordnet ist. Ein solcher Gasmeßfühler besitzt relativ viele Bauteile und ist teuer hinsichtlich dieser Bauteile und auch hinsichtlich der Montage; außerdem hat ein solcher Gasmeßfühler eine relativ große Baulänge und seine Schüttelfestigkeit, insbesondere unter Berücksichtigung der nicht dargestellten Kabelanschlüsse ist nicht befriedigend.

### Vorteile der Erfindung

Der erfindungsgemäße, als Massenprodukt hergestellte Gasmeßfühler mit den kennzeichnenden Merkmalen gemäß Anspruchs 1 hat demgegenüber den Vorteil, daß er eine relativ kurze Baulänge hat und daß außerdem seine zum Anschlußbereich gehörenden Teile einfach herstellbar und montierbar sind; infolge dieser genannten Vorteile ist der Gasmeßfühler billiger als bisher bekannte Gassensoren, was bei Massenprodukten von erheblichem Wert ist. Darüber hinaus wird durch diese Erfindung bewirkt, daß im Anschlußbereich dieses Gasmeßfühlers keine elektrischen Unterbrechungen aufgrund von Zug-, Verdreh- und/oder Schüttelbeanspruchungen verursacht werden.

Durch die in den Unteransprüchen aufgeführten Maßnahmen sind vorteilhafte Weiterbildungen und Verbesserungen des im Hauptanspruch angegebenen Gasmeßfühlers möglich; besonders vorteilhaft ist es, diese Ausführungsform eines elektrischen Anschlusses bei Sauerstoffsensoren zu verwenden, die ein mit einem meßgasseitigen Boden versehenes Festelektrolytrohr haben. Außerdem wird durch diesen elektrischen Anschluß des Gasmeßfühlers eine einfache und wirksame Sicherung des stabförmigen Bauteils gegen ungewolltes Verdrehen ermöglicht.

### Zeichnung

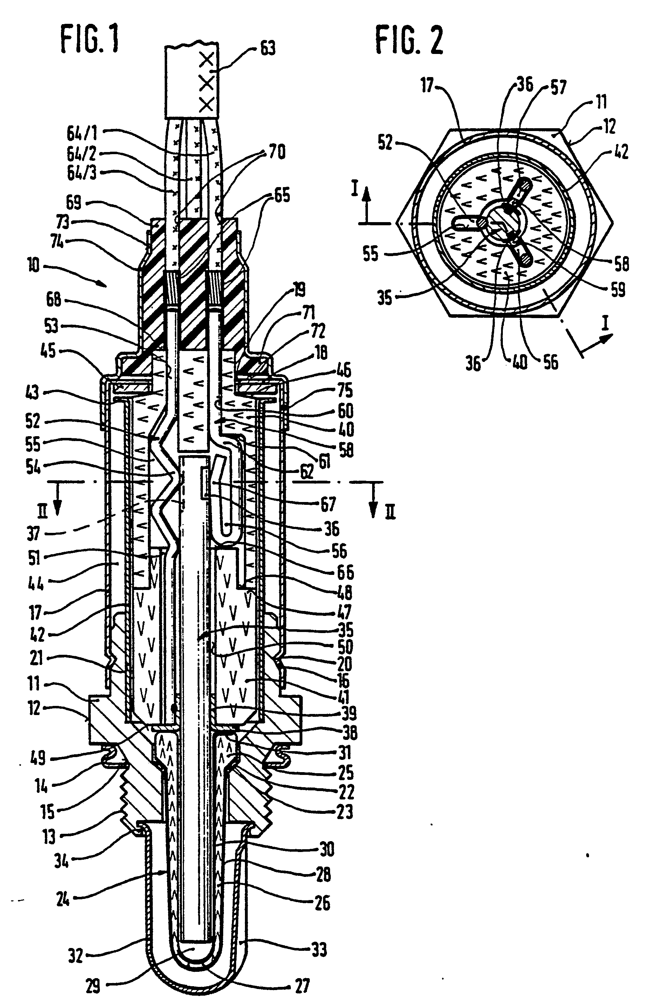

Ein Ausführungsbeispiel der Erfindung ist in der Zeichnung dargestellt und in der nachfolgenden Beschreibung näher erläutert. Es zeigen Figur 1 einen Längsschnitt durch einen erfindungsgemäßen Gasmeßfühler in vergrößerter Darstellung (Schnittlinie I/I in Figur 2) und Figur 2 einen Querschnitt durch den Gasmeßfühler nach Figur 1 gemäß der Linie II/II.

### Beschreibung des Ausführungsbeispiels

Der in den Figuren 1 und 2 der Zeichnung dargestellte Gasmeßfühler 10 hat ein metallisches Gehäuse 11, das an seiner Außenseite ein Schlüsselsechskant 12 und ein Gewinde 13 als Befestigungsmittel für den Einbau in ein nicht dargestelltes Meßgasrohr aufweist; für den abdichtenden Einbau dieses Gehäuses 11 in dem Meßgasrohr dient ein ringförmiges Dichtelement 14, das in einer zwischen Schlüsselsechskant 12 und Gewinde 13 angeordneten Ringnut 15 unverlierbar festgelegt ist. Auf dem meßgasfernen Endabschnitt des Gehäuses 11 ist noch eine Ringnut 16 eingearbeitet, die zur Festlegung einer das Gehäuse 11 verlängernden Verschlußhülse 17 dient; diese Verschlußhülse 17, welche meßgasfern einen Boden 18 mit einer zentralen Öffnung 19 hat, ist mittels mehrerer Einprägungen 20 in der Ringnut 16 festgelegt.

Das Gehäuse 11 hat eine Längsbohrung 21 mit einer Schulter 22, die der Meßseite des Gasmeßfühlers 10 abgewendet ist und ein ringförmiges Dichtelement 23 trägt. Auf dieser mit dem Dichtelement 23 versehenen Schulter 22 der Gehäuse-Längsbohrung 21 liegt ein Sensorelement 24 mit seinem Kopf 25 auf.

Dieses Sensorelement 24 ist im vorliegenden Beispiel ein an sich bekannter Sauerstoffmeßfühler wie er aus der DE-GbmS 81 01 584 bekannt ist und der bevorzugterweise für das Messen des Sauerstoffpartialdruckes in Abgasen Verwendung findet. Dieses Sensorelement 24 hat ein Festelektrolytrohr 26, dessen meßgasseitiger Endabschnitt mittels eines Bodens 27 verschlossen ist, das auf seiner dem Meßgas ausgesetzten Außenseite eine schichtförmige, gasdurchlässige Meßelektrode 28 und auf seiner dem Innenraum 29 zugewendeten Seite eine einem Referenzgas (z. B. Luft) ausgesetzte, gasdurchlässige und schichtförmige Bezugselektrode 30 trägt. Während die Meßelektrode 28 über das ringförmige Dichtelement 23 mit dem elektrisch an Masse liegenden Gehäuse 11 in Berührung steht, führt die Bezugselektrode 30 bevorzugterweise von der Innenseite des Bodens 27 bis auf die meßgasferne Stirnfläche 31 des Festelektrolytrohres 26. Zur Erhöhung der Lebensdauer der zumeist aus einer dünnen Platinschicht bestehenden Meßelektrode 28 ist diese mit einer gasdurchlässigen (nicht dargestellten) Schutzschicht überzogen, die beispielsweise aus Magnesiumspinell bestehen kann.

Das meßgasseits aus der Längsbohrung 21 des Gehäuses 11 herausragende Teil des Sensorelements 24 ist mit Abstand von einem Schutzrohr 32 umgeben, welches für den Ein- bzw. Austritt von Meßgasen Öffnungen 33 besitzt und am meßgasseitigen Ende des Gehäuses 11 durch eine Bördelung 34 oder ähnliches festgelegt ist; dieses Schutzrohr 32 dient dazu, daß im Meßgas auftretende hohe Temperaturwechsel und im Meßgas enthaltene Partikel nicht direkt auf das Sensorelement 24 einwirken und zu Schäden daran führen.

Der Innenraum 29 des Sensorelementes 24 ist im wesentlichen durch ein stabförmiges Bauteil 35 ausgefüllt, welches aber auch meßgasfern noch aus dem Sensorelement 24 herausragt; dieses stabförmige Bauteil 35 ist ein elektrisches Heizelement, dessen (nicht dargestellte) Heizwindungen in dem meßgasseitigen Endabschnitt derart angeordnet sind, so daß der aus dem Gehäuse 11 herausragende Abschnitt des Sensorelementes 24 damit beheizt wird. Die Heizwindungen sind bevorzugt als Leiterbahnen ausgebildet, welche dann für ihren elektrischen Anschluß bis zur Mantelfläche des meßgasfernen Endabschnitts des stabförmigen Bauteils 35 geführt sind und dort als flächenhafte Anschlußbereiche 36 ausgebildet sind. Die leiterbahnartigen Heizwindungen und die damit in Verbindung stehenden, zu den Anschlußbereichen 36 führenden (nicht dargestellten) Leiterbahnen sind von einer dünnen Elektroisolierung (nicht dargestellt) bedeckt. Dieses stabförmige Bauteil 35 endet mit seinem meßgasfernen Endabschnitt innerhalb des von der Verschlußhülse 17 umgebenen Bereiches und ist mit einem Fixierelement 37 versehen, welches für den lagerichtigen Einbau des stabförmigen Bauteils 35 sorgt; im vorliegenden Beispiel ist als ein solches Fixierelement 37 eine Nut in der Mantelfläche des meßgasfernen Endabschnitts vom stabförmigen Bauteil 35 eingeformt. Aus der US-PS-4 035 613 ist bereits ein derartiges Heizelement im Prinzip bekannt, es unterscheidet sich von dem stabförmigen Bauteil 35 im wesentlichen nur dadurch, daß jeweils ein elektrischer Anschluß an jedem Endabschnitt angeordnet ist, also nicht beide Anschlußbereiche 36 an nur einem einzigen Endabschnitt hat.

Auf der meßgasfernen Stirnfläche 31 des Sensorelementes 24, auf der die schichtförmige Bezugselektrode 30 endet, liegt ein ringförmiges Kontaktteil 38 auf, welches das stabförmige Bauelement 35 koaxial umgibt und mittels einem vom Sensorelement 24 wegweisenden Schaft 39 das stabförmige Bauteil 35 festklemmt. Der Schaft 39 dieses Kontaktteils 38 ist mit mehreren (nicht dargestellten) Längsschlitzen ausgestattet, die meßgasfern offen sind.

In dem vom Sensorelement 24, dem Gehäuse 11 und der Verschlußhülse 17 begrenzten Raum sind zwei Isolierhülsen 40 und 41 untergebracht, welche bevorzugt aus einem keramischen Material (z. B. Aluminiumoxid) bestehen und mittels einer Führungshülse 42 koaxial im Gasmeßfühler 10 gehalten sind. Die Führungshülse 42 ist meßgasseits in der Längsbohrung 21 des Gehäuses 11 festgelegt (z. B. durch Einpressen oder Verstemmen) und hat an ihrem meßgasfernen Ende einen nach außen weisenden Flansch 43, der seitlich bis etwa an die Verschlußhülse 17 reicht; der zwischen dieser Führungshülse 42 und der Verschlußhülse 17 gebildete Ringraum 44 wirkt als Barriere gegenüber Feuchtigkeit, die im Bereich zwischen dem meßgasseitigen Endabschnitt der Verschlußhülse 17 und dem Gehäuse 21 mit der als Referenzgas dienenden Luft in den Gasmeßfühler 10 eintreten kann. Zwischen dem Flansch 43 der Führungshülse 42 und dem Boden 18 der Verschlußhülse 17 ist ein ringförmiges Federelement 45 (Tellerfeder) angeordnet, das sich einerseits an dem Boden 18 der Verschlußhülse 17 abstützt und andererseits unter mechanischer Vorspannung auf einem koaxialen Absatz 46 der ersten Isolierhülse 40 aufliegt. Infolge der mechanischen Vorspannung dieses Federelementes 45 drückt die erste Isolierhülse 40 mit ihrer meßgasseitigen Stirnfläche 47 auf einen meßgasfernen Ringabsatz 48 der zweiten Isolierhülse 41 und demzufolge die meßgasseitige Stirnfläche 49 der zweiten Isolierhülse 41 auf das Kontaktteil 38, welches mit der Bezugselektrode 30 elektrisch in Verbindung steht.

Die zweite Isolierhülse 41 umgibt das als Heizelement wirkende, stabförmige Bauteil 35 in ihrer Längsbohrung 50 und umfaßt mit dem meßgasnahen Endabschnitt dieser Längsbohrung 50 den Schaft 39 des Kontaktteils 38; in einer achsparallel zur Längsbohrung 50 der zweiten Isolierhülse 41 verlaufenden Nut 51 ist ein Leiterdraht 52 entlanggeführt, welcher meßgasseits mittels eines bekannten Verfahrens (z. B. Schweißen) am Kontakteil 38 befestigt ist;

der meßgasferne Endabschnitt dieses Leiterdrahtes 52 ist durch eine in Längsrichtung durch die erste Isolierhülse 40 verlaufende Bohrung 53 geführt und steht aus dieser meßgasfern noch heraus. In der Mitte ist der Leiterdraht 52 als wellenförmige Auslenkung 54 ausgebildet; diese Auslenkung 54 ist in einer radial zur Längsachse des Gassensors 10 ausgerichteten Vertiefung 55 der ersten Isolierhülse 40 seitlich fixiert.

Mit dem zur Längsachse des Gasmeßfühlers 10 weisenden Teil der Auslenkung 54 taucht der Leiterdraht 52 in das am meßgasfernen Endabschnitt des stabförmigen Bauteils 35 befindliche Fixierelement 37, das hier in bevorzugter Weise als Längsnut am stabförmigen Bauteil 35 gestaltet ist und als Sicherung gegen Verdrehen des stabförmigen Bauteils 35 dient.

In der ersten Isolierhülse 40 befinden sich zwei zusätzliche Vertiefungen 56 und 57, die ebenfalls radial auf die Längsachse des Gasmeßfühlers 10 zulaufen und der Aufnahme und Fixierung jeweils eines federnden Verbindungselements 58 bzw. 59 dienen. Zur zeichnerisch klareren Darstellung zeigt die Figur 1 einen Schnitt, der gemäß der in der Figur 2 gezeigten Schnittlinie I/I verläuft. Die erste Isolierhülse 40 ist für die meßgasfernen Endabschnitte der drahtförmigen, federnden Verbindungselemente 58 und 59 jeweils mit einem Durchgangsloch 60 versehen, welche meßgasseits in die entsprechenden Vertiefungen 56 bzw. 57 einmünden und je eine meßgasseits weisende Schulter 61 bilden. Die meßgasfernen Endabschnitte der drahtförmigen, federnden Verbindungselemente 58 bzw. 59 ragen meßgasfern aus der ersten Isolierhülse 40 heraus; die meßgasnahen, aus dem Durchgangsloch 60 der ersten Isolierhülse 40 heraustretenden Abschnitte der federnden Verbindungselemente 58 bzw. 59 sind in der jeweiligen Vertiefung 56 bzw. 57 in der ersten Isolierhülse 40 Z-förmig nach außen gebogen und legen sich mit dieser Z-förmigen Abwinkelung 62 an einer Schulter 61 in der ersten Isolierhülse 40 an; diese Z-förmigen Abwinkelungen 62 der federnden Verbindungselemente 58 bzw. 59 dienen als Sicherung gegen Zug-, Verdreh- und/oder Schüttelbeanspruchungen, die vom Anschlußkabel 63 mit seinen Anschlußdrähten 64/1 und 64/2 ausgehen. Die meßgasnahen Endabschnitte der Anschlußdrähte 64/1 und 64/2 sind mit den meßgasfernen, aus der ersten Isolierhülse 40 herausragenden Endabschnitten der federnden Verbindungselemente 58 bzw. 59 mittels Verbindungshülsen 65 durch Verquetschen, Verschweißen und/ oder Verlöten verbunden. Mit einer entsprechenden Verbindungshülse 65 ist auch der aus der ersten Isolierhülse 40 herausragende Endabschnitt des Leiterdrahtes 52 mit dem Anschlußdraht 64/3 des Anschlußkabels 63 verbunden. Jede der Z-förmigen Abwinkelungen 62 der federnden Verbindungselemente 58 und 59 verläuft meßgasseits bis zu einer Anschlagfläche 66, welche von der meßgasfernen Stirnfläche der zweiten Isolierhülse 41 gebildet ist. Die federnden Verbindungselemente 58, 59 sind dann haarnadelförmig ausgebildet, legen sich dabei an der erwähnten Anschlagfläche 66 der zweiten Isolierhülse 41 an und führen in Richtung des meßgasfernen Endabschnitts des Gasmeßfühlers 10 bis zur jeweiligen Z-förmigen Abwinkelung 62 des federnden Verbindungselementes 58 bzw. 59 zurück. Diese freien Endabschnitte sind mit jeweils einem Knick 67 versehen, mit denen sie auf dem zugehörigen Anschlußbereich 36 auf dem stabförmigen Bauteil 35 unter mechanischer Vorspannung aufliegen; im Bereich des Knicks 67 ist der Querschnitt des jeweiligen federnden Verbindungselementes 58, 59 in bevorzugter Weise derart abgeplattet, so daß der zwischen dem jeweiligen Knick 67 und dem jeweiligen Anschlußbereich 36 auftretende Druck zu keiner Beschädigung des Anschlußbereichs 36 führt. Anstelle einer Z-förmigen Abwinkelung 62 kann auch eine wellenförmige Abwinkelung Anwendung finden, um eine Sicherung gegen Zug- und/oder Schüttelbeanspruchungen des Kabels 63 aufzufangen. Es ist außerdem möglich, daß zusätzlich zum beschriebenen Fixierelement 37 im stabförmigen Bauteil 35 oder anstelle des beschriebenen nutförmigen Fixierelementes 37 auch im Bereich der Anschlußbereiche 36 Fixierelemente im stabförmigen Bauteil 35 eingeformt sind, die gleichfalls als Verdrehsicherung für das stabförmige Bauteil 35 geeignet sind.

Auf der meßgasfernen Stirnfläche 68 der ersten Isolierhülse 40 stehen in bevorzugter Weise die meßgasseitigen Enden der Verbindungshülsen 65 und auch der meßgasseitige Endabschnitt eines elastischen Isolierstopfens 69 auf, welcher in Durchgangsbohrungen 70 die Verbindungshülsen 65 und Teile der Anschlußdrähte 64/1 bis 64/3 fest und abdichtend umgibt. Das meßgasseitige Flanschteil 71 dieses Isolierstopfens 69 umgibt den durch die Öffnung 19 der Verschlußhülse 17 herausragenden Endabschnitt der ersten Isolierhülse 40 und steht mit seiner meßgasseitigen Stirnfläche 72 auf der Außenseite des Bodens 18 der Verschlußhülse 17 abdichtend auf; auf der Mantelfläche 73 dieses Isolierstopfens 69 ist eine rohrförmige, vorzugsweise metallische Kopfhülse 74 angeordnet, die mit ihrem aufgeweiteten, meßgasseitigen Endabschnitt eng über den meßgasfernen Endabschnitt der Verschlußhülse 17 greift und an dieser Verschlußhülse 17 mittels einiger Schweißpunkte 75 oder anderer bekannter Befestigungsmittel festgelegt ist und den Isolierstopfen 69 in Längsrichtung des Gasmeßfühlers 10 unter mechanischer Vorspannung hält.

Es sei hinzugefügt, daß die beschriebene Verbindung zwischen den Anschlußbereichen 36 des stabförmigen Bauelements 35 und den Verbindungselementen 58, 59 nicht nur für Meßfühler 10 geeignet ist, die der Bestimmung des Sauerstoffpartialdruckes in Gasen dienen und ein Festelektrolytrohr aufweisen, sie können vielmehr auch für solche Meßfühler Anwendung finden, bei denen ein stabförmiges Bauteil meßgasseits aus einem Gehäuse herausragt und ein Meßelement trägt (siehe z. B. US-PS-4 212 720).

**Patentansprüche**

1. Gasmeßfühler (10), insbesondere Gasmeßfühler zur Bestimmung des Sauerstoffgehaltes in Abgasen von Brennkraftmaschinen, mit einem Gehäuse (11), das Befestigungsmittel (12, 13) für den Einbau in eine Meßgasleitung besitzt und zumindest mit dem meßgasseitigen Endabschnitt seiner Längsbohrung (21) mindestens einen Abschnitt eines Sensorelementes (24) rest und abdichtend umfaßt, zu welchem ein stabförmiges Bauteil (35) gehört, das auf der Mantelfläche seines meßgasfernen Endabschnitts mindestens zwei flächenhafte Anschlußbereiche (36) hat, auf denen mit Anschlußdrähten (64/1, 64/2) elektrisch in Verbindung unter mechanischer Vorspannung stehende, federnde Verbindungselemente aufliegen, die in radialer Richtung auf den jeweiligen Anschlußbereich (36) des stabförmigen Bauteils (35) drücken, in einer Vertiefung eines Isolierteils fixiert und mit einer Z- bzw. wellenförmigen Abwinkelung (62) versehen sind, wobei das stabförmige Bauteil (35) mindestens ein Fixierelement (37) zur Sicherung gegen verdrehen hat, dadurch gekennzeichnet, daß das mindestens eine federnde Verbindungselement (58, 59) und die Anschlußbereiche (36) des stabförmigen Bauteils (35) innerhalb des Gasmeßfühlers (10) angeordnet sind, daß dabei jedes federnde Verbindungselement (58, 59) in einer Vertiefung (56, 57) eines innerhalb des Gasmeßfühlers (10) angeordneten Isolierteils (40) fixiert ist, wobei sich das mindestens eine federnde Verbindungselement (58, 59) an einer meßgasseits weisenden Schulter (61) und außerdem an einer vom Sensorelement (24) abgewandten Anschlagfläche (66) des Gasmeßfühlers (10) elektrisch isoliert abstützt.

2. Gasmeßfühler nach Anspruch 1, dadurch gekennzeichnet, daß sich die vom Sensorelement (24) abgewendete Anschlagfläche (66) neben dem meßgasnahen Ende des federnden Verbindungselementes (58, 59) befindet.

3. Gasmeßfühler nach Anspruch 1 oder 2, dadurch gekennzeichnet, daß jedes federnde Verbindungselement (58, 59) drahtförmig ist.

4. Gasmeßfühler nach einem der Ansprüche 1 bis 3, dadurch gekennzeichnet, daß der meßgasferne Abschnitt jedes federnden Verbindungselementes (58, 59) in einem in Längsrichtung des Gasmeßfühlers (10) verlaufenden Durchgangsloch (60) einer ersten Isolierhülse (40) angeordnet ist und mit seinem Endabschnitt meßgasfern aus dieser ersten Isolierhülse (40) herausragt.

5. Gasmeßfühler nach einem der Ansprüche 1 bis 4, dadurch gekennzeichnet, daß die vom Sensorelement (24) abgewendete Anschlagfläche (66) die meßgasferne Stirnfläche einer zweiten Isolierhülse (41) ist, die sich meßgasseits der ersten Isolierhülse (40) anschließt und im Gasmeßfühler (10) und/oder am meßgasseitigen Endabschnitt der ersten Isolierhülse (40) lagerichtig fixiert ist.

6. Gasmeßfühler nach einem der Ansprüche 1 bis 5, dadurch gekennzeichnet, daß das Gehäuse (11) eine meßgasferne Verschlußhülse (17) besitzt, welche meßgasfern einen Boden (18) aufweist, der eine den Anschlußdrähten (64/1-64/3) dienende Öffnung (19) besitzt und auf seiner meßgasseitigen Fläche ein koaxial angeordnetes, mechanisch vorgespanntes Federelement (45) abstützt, welches axial auf die erste und zweite Isolierhülse (40, 41) und auch auf ein meßgasseitiges Dichtelement (23) des Gasmeßfühlers (10) wirkt.

7. Gasmeßfühler nach einem der Ansprüche 1 bis 6, dadurch gekennzeichnet, daß das Sensorelement (24) ein meßgasseits mit einem Boden (27) verschlossenes, sauerstoffionenleitendes Festelektrolytrohr (26) hat, das auf seiner Außenseite eine dem Meßgas ausgesetzte, schichtförmige, gasdurchlässige und bevorzugt mit einer zusätzlichen gasdurchlässigen Schicht versehene Meßelektrode (28) und auf seiner Innenseite eine einem Referenzgas ausgesetzte, gasdurchlässige und schichtförmige Bezugselektrode (30) trägt und das (Festelektrolytrohr) in seinem Innenraum (29) als stabförmiges Bauteil (35) ein elektrisches Heizelement enthält.

8. Gasmeßfühler nach Anspruch 7, dadurch gekennzeichnet, daß die Bezugselektrode (30) mit ihrem zugehörigen Anschlußdraht (64/3) mittels eines Leiterdrahtes (52) elektrisch verbunden ist, der meßgasseits vorzugsweise mit einem Kontaktteil (38) verbunden ist, welches auf der meßgasfernen Stirnfläche (31) des Festelektrolytrohres (26) mit der Bezugselektrode (30) elektrisch in Verbindung steht.

9. Gasmeßfühler nach einem der Ansprüche 1 bis 8, dadurch gekennzeichnet, daß mindestens eines der federnden Verbindungselemente (58, 59) mit einem Teil seiner Abwinkelung (62) und/oder der Leiterdraht (52) mit einer seitlichen Auslenkung (54) in das Fixierelement (37) des stabförmigen Bauteils (35) einrastet.

10. Gasmeßfühler nach einem der Ansprüche 1 bis 9, dadurch gekennzeichnet, daß die Abwinkelungen (62) der federnden Verbindungselemente (58, 59) und/oder die Auslenkung (54) des Leiterdrahtes (52) in jeweils einer Ebene liegen, die radial zur Längsachse des Gasmeßfühlers (10) angeordnet ist.

11. Gasmeßfühler nach einem der Ansprüche 1 bis 10, dadurch gekennzeichnet, daß das Fixierelement (37) am stabförmigen Bauteil (35) eine Längsnut ist.

## Claims

1. Gas sensor (10), in particular gas sensor for determining the oxygen content of the exhaust gases of internal-combustion engines, having a casing (11), which has fastening means (12, 13) for installation in a measurement gas pipe and encompasses, firmly and so as to provide a seal, at least one section of a sensor element (24) by means of the measurement gas side end section of its longitudinal hole (21), which sensor element (24) includes a rod-shaped component (35) which has at least two surface-type connection regions (36) on the outside surface of its end section remote from the measurement gas, on which connection regions (36) there are sprung connection elements electrically connected under mechanical load to connecting wires (64/1, 64/2), which connecting elements press in radial direction on the particular connecting region (36) of the rod-shaped component (35), are fixed in a depression of an insulation part and are provided with a Z-shaped or wave-shaped bend (62), the rod-shaped component (35) having at least one fixing element (37) to secure it against rotation, characterized in that at least one sprung connection element (58, 59) and the connecting regions (36) of the rod-shaped component (35) are located within the gas sensor (10), that in this arrangement, each sprung connection element (58, 59) is fixed in a depression (56, 57) of an insulation part (40) located within the gas sensor (10), at least one sprung connection element (58, 59) being supported so as to be electrically insulated on a shoulder (61) pointing towards the measurement gas and also on a contact surface (66), pointing away from the sensor element (24), of the gas sensor (10).

2. Gas sensor according to Claim 1, characterized in that the stop surface (66) pointing away from the sensor element (24) is located near the end, adjacent to the measurement gas, of the sprung connection element (58, 59).

3. Gas sensor according to Claim 1 or 2, characterized in that each connecting element (58, 59) is wireshaped.

4. Gas sensor according to one of Claims 1 to 3, characterized in that the section, remote from the measurement gas, of each sprung connection element (58, 59) is located in a penetration hole (60), extending in the longitudinal direction of the gas sensor (10), of a first insulation sleeve (40) and that its end section remote from the measuring gas protrudes from this first insulation sleeve (40).

5. Gas sensor according to one of Claims 1 to 4, characterized in that the stop surface (66) pointing away from the sensor element (24) is the end surface, remote from the measuring gas, of a second insulating sleeve (41) which is in contact on the measurement gas side of the first insulation sleeve (40) and is fixed in the correct position in the gas sensor (10) and/or on the measurement gas side end section of the first insulation sleeve (40).

6. Gas sensor according to one of Claims 1 to 5, characterized in that the casing (17) has a closure sleeve (17) remote from the measurement gas, which closure sleeve (17) has a bottom (18), remote from the measurement gas, which has an opening (19) used for the connecting wires (64/1 - 64/3) and supports on its measurement gas side surface a coaxially located mechanically preloaded spring element (45) which acts axially on the first and second insulating sleeves (40, 41) and also on a measurement gas side sealing element (23) of the gas sensor (10).

7. Gas sensor according to one of Claims 1 to 6, characterized in that the sensor element (24) has an oxygen ion conducting solid electrolyte tube (26) closed by a bottom (27) on the measurement gas side, which solid electrolyte tube (26) carries, on its outside, a layered gas permeable measurement electrode (28), subjected to the measurement gas and preferably provided with an additional gas permeable layer, and carries, on its inside, a gas permeable and layered reference electrode (30), subjected to a reference gas, and which (solid electrolyte tube) contains an electrical heating element in its internal space (29) as a rod-shaped component (35).

8. Gas sensor according to Claim 7, characterized in that the reference electrode (30) is electrically connected to its associated connecting wire (64/3) by means of a strip conductor (52) which is preferably connected, on the measurement gas side, to a contact part (38) which is in electrical connection with the reference electrode (30) on the end surface (37), remote from the measurement gas, of the solid electrolyte tube (26).

9. Gas sensor according to one of Claims 1 to 8, characterized in that at least one of the sprung connection elements (58, 59), with a part of its bend (62), and/or the strip conductor (52), with its side excursion (54), engages in the fixing element (37) of the rod-shaped component (35).

10. Gas sensor according to one of Claims 1 to 9, characterized in that the bends (62) of the sprung connecting elements (58, 59) and/or the excursion (54) of the strip conductor (52) are located, in each case, in a plane which is located at right angles to the longitudinal axis of the gas sensor (10).

11. Gas sensor according to one of Claims 1 to 10, characterized in that the fixing element (37) on the rod-shaped component (35) is a longitudinal groove.

## Revendications

1. Capteur de mesure de gaz (10), en particulier capteur de mesure de gaz pour la détermination de la teneur en oxygène dans les gaz d'échappement de moteurs à combustion interne, avec un carter (11), qui possède des moyens de fixation (12, 13) pour le montage dans une conduite de gaz à mesurer et englobe au moins avec la section d'extrémité, côté gaz à mesurer, de son perçage longitudinal (21), de manière rigide et étanche, au moins une section de son élément de sonde (24) auquel appartient un élément constitutif (35) en forme de barreau, qui possède au moins deux zones plates de raccordement (36) sur la surface d'enveloppe de sa section d'extrémité qui est située côté opposé au gaz, sur lesquelles s'appuient des éléments de liaison élastiques, sous précontrainte mécanique, reliés électriquement avec des câbles de raccordement (64/1, 64/2). Ces éléments de liaison pressent, dans le sens axial, sur chaque zone de raccordement (36) de l'élément constitutif (35) en forme de barreau, sont fixés dans une cavité d'une pièce d'isolation et possèdent un pliage (62), en forme de Z, ou en forme d'ondes, l'élément constitutif (35), en forme de barreau possèdant au moins un élément de fixation (37) comme sécurité en rotation, caractérisé en ce que l'élément de liaison (58, 59) élastique, et les zones de raccordement (36) de l'élément constitutif (35) en forme de barreau, sont situés à l'intérieur du capteur de mesure de gaz (10), en ce qu'à cette occasion, chaque élément de fixation élastique (58, 59) est fixé dans une cavité d'une pièce d'isolation (40), disposée à l'intérieur du capteur de mesure de gaz (10), faisant qu'au moins un élément de liaison élastique (58, 59) s'appuie sur un épaulement (61) tourné vers le gaz et en outre sur une surface d'appui (66) du capteur de mesure de gaz (10), isolée électriquement et située du côté opposé à l'élément de sonde (24).

2. Capteur de mesure de gaz, selon la revendication 7, caractérisé en ce que la surface d'appui (66), située du côté opposé à l'élément de sonde (24), se trouve à côté de l'extrémité, côté gaz à mesurer, de l'élément de liaison élastique (58, 59).

3. Capteur de mesure de gaz, selon la revendication 1 ou 2, caractérisé en ce que chaque élément de liaison élastique (58, 59) est filiforme.

4. Capteur de mesure de gaz, selon l'une des revendications 1 à 3, caractérisé en ce que la section, côté opposé au gaz, de chaque élément de liaison élastique (58, 59), est disposée dans un trou traversant (60), d'une première douille d'isolation (40), se développant dans le sens longitudinal du capteur de mesure de gaz (10) et émergeant d'une première douille d'isolation (40), avec sa section d'extrémité située côté opposé au gaz.

5. Capteur de mesure de gaz, selon l'une des revendications 1 à 4, caractérisé en ce que la surface d'appui (66) qui est située du côté opposé à l'élément de sonde (24) est la surface frontale, côté opposé au gaz à mesurer, d'une deuxième douille d'isolation (41), qui se raccorde du côté gaz à mesurer de la première douille d'isolation (40) et est fixée en position dans le capteur de mesure de gaz (10) et/ou sur la section d'extrémité, située côté gaz à mesurer,

de la première douille d'isolation (40).

6. Capteur de mesure de gaz, selon l'une des revendications 1 à 5, caractérisé en ce que le carter (11) possède une douille d'obturation (17), côté opposé au gaz, qui présente un fond (18), du côté opposé au gaz, ayant une ouverture (19), servant aux câbles de raccordement (64/1-64/3) et sur qui s'appuie, sur sa surface située côté gaz à mesurer, un élément élastique (45), précontraint mécaniquement, disposé coaxialement, qui agit axialement sur la première et sur la deuxième douille d'isolation (40, 41) et sur un élément d'étanchéité (23) du capteur de mesure de gaz (10), qui est situé côté gaz à mesurer.

7. Capteur de mesure de gaz, selon l'une des revendications 1 à 6, caractérisé en ce que l'élément de sonde (24) possède un tube à électrolyte solide (26), conducteur d'ions oxygène, disposé côté gaz à mesurer et fermé avec un fond (27). Ce tube possède sur son côté extérieur une électrode de mesure (28), exposée au gaz à mesurer, en forme de couche, perméable aux gaz et revêtue, selon une forme de réalisation préférentielle, d'une couche supplémentaire perméable aux gaz. Il porte sur son côté intérieur une électrode de référence (30), exposée au gaz de référence, perméable aux gaz et en forme de couche et qui (le tube à électrolyte solide) comprend en son espace intérieur (29) un élément chauffant électrique, sous la forme d'un élément constitutif (35) en forme de barreau.

8. Capteur de mesure de gaz, selon la revendication 7, caractérisé en ce que l'électrode de référence (30) est reliée électriquement avec son câble de raccordement correspondant (64/3), au moyen d'un câble conducteur (52), qui est avantageusement relié, côté gaz à mesurer, avec une pièce de contact (38), qui, sur la surface frontale (37) du tube à électrolyte solide (26) qui est située du côté opposé au gaz, est en liaison électrique avec l'électrode de référence (30).

9. Capteur de mesure de gaz, selon l'une des revendications 1 à 8, caractérisé en ce qu'au moins l'un des éléments de liaison élastiques (58, 59) encliquette, avec une partie de ses pliages (62) et/ou du câble conducteur (52), avec une déformation (54) latérales, dans l'élément de fixation (37) de l'élément constitutif (35) en forme de barreau.

10. Capteur de mesure de gaz, selon l'une des revendications 1 à 9, caractérisé en ce que les pliages (62) des éléments de liaison élastiques (58, 59), et/ou la déformation (54) du câble conducteur (52), sont situés chacun dans un plan qui est disposé radialement par rapport à l'axe longitudinal du capteur de mesure de gaz (10).

11. Capteur de mesure de gaz, selon l'une des revendications 1 à 10, caractérisé en ce que l'élément de fixation (37) sur l'élément constitutif (35), en forme de barreau, est une gorge longitudinale.

FIG.1  FIG. 2

0 132 691

1